# EUROPEAN PATENT SPECIFICATION

(11) **EP 4 082 761 B1**
(45) Date of publication and mention of the grant of the patent: **27.03.2024**
(21) Application number: 21075003.0
(22) Date of filing: 30.04.2021
(51) Int. Cl.: B29C 73/02, B32B 17/10

(54) **REPAIR INJECTOR WITH SUPPORT DEVICE FOR LAMINATED GLASS**
REPARATURINJEKTOR MIT STÜTZVORRICHTUNG FÜR LAMINIERTES GLAS
INJECTEUR DE RÉPARATION DOTÉ D'UN DISPOSITIF DE SUPPORT POUR VERRE FEUILLETÉ

(43) Date of publication of application: 02.11.2022
(73) Proprietor: DB Imagineering BV., 5061 JR Oisterwijk (NL)
(72) Inventor: Schellekens, Johannes Wilhelmus Maria, 5061 JR Oisterwijk (NL)

(56) References cited:
- US-A- 5 670 180
- US-A1- 2009 108 482
- US-A1- 2017 190 125
- US-B1- 6 190 150

## Description

The present invention concerns a new developed repair injector for laminated glass panes, mostly automobile windshields, to remove damages or cracks.

### Background of the invention

The state of the art discloses some repair tools, which are described in Patent Applications, such as in the US Patent Application US2019/0016071 A1; filed: 17-01-2019, titled: "Windshield and Laminated Glass Repair Tool"; applicant Glas-Weld Systems, Inc. ; Oregon USA; inventors: Mackey; Schuepback, Plumb, Spoo and Scheffler.

The invention describes a glass repair tool for injecting resin into defects in the glass. Said tool is removable engageable on the glass pane, wherein the glass repair tool, being a resin injector, is in sliding ratcheted engagement with the centre of a matching support device to press on the glass pane. However, in practice there are more drawbacks in the structure of this injector. The repair tool has a very thin driving axle with a small constant pitch to move the pistons, so the crack is injected with resin in the pane. Then the piston has to rotate within the cylinder, which rotational movement causes a large friction. Then the resin chamber is situated directly under the piston and so the injection tube is firmly put against the windshield, which can lead to further damaging of the windshield. In practice, the handling of the heavy steel repair tool is a problem. The self-locking property of the piston with the thinly threaded axle is missing. Therefore, the piston slides down in order to get the normal air pressure under the piston. There is also a problem to stabilize and to put the tube with the resin injection mouth exactly above the damaged point of the windshield. So, there are several drawbacks when using said described injection tool in practice.

Furthermore, the state of the art discloses a US Patent nr. US5,760,180; filed 05-04-1996 and patented 23-09-1997; titled: "Laminated Glass and Windshield Repair Device", applicant: Glass-Weld Systems, Inc. Oregon, USA; inventor Mr Mackey Beveridge, Oregon, USA. Said document discloses a repair injector according to the preamble of claim 1.

This invention described a repair device to repair bulls-eye type cracks and elongated cracks in laminated glass. The repair device includes a piston in a cylinder and is driven by a relatively small diameter axle with a corresponding screw thread. The heavy weight of this steel repair tool proves a problem during repair handlings.

So, this repair device has the same drawbacks as the aforementioned patent. The self-locking property of the spindle and the piston is executed with a locking-screw (48) in a groove with a very small diameter. In practice, this repair device is not very easy to handle.

Then there is a Dutch Patent Application nr. NL1042482; filed 26-07-2017; titled: "Instrument voor luchtverwijdering in reparatiesets voor gelamineerd glas". In English: "Instrument or Device for Removing Air from Repair Resins in Laminated Glass", applicant and inventor: Carpe Diem B.V., Mr Johannes, Wilhelmus, Maria Schellekens, the Netherlands. This invention is only meant for removing air bubbles from repair resins in bulls-eye cracks in laminated glass. The drawback of this invention is, that in practice, this cannot be used in combination of injecting repair resin and removing air bubbles.

### Object of the invention.

The aim of the invention is to overcome mentioned drawbacks and to provide a repair injector with a known support device for laminated glass panes in automobile windshields. The inventive repair injector has to operate very efficiently and must be manufactured at relatively low costs.

### Summary of the invention.

The repair injector according to the invention has such characteristics that said repair injector is built-up with a first cylindrical casing, wherein merely an axial movable piston assembly with an injection tube for repair resin and extract air bubbles from said repair resin is placed, wherein said first cylindrical casing two-stepped in axial sense is executed with a lower tube part with an outer thread diameter D1 for connection with the support device and an upper tube part with an outer helical groove with diameter D2, where D1 < D2, and a second outer rotating cylindrical casing is mounted around this with an internal steel cam sliding in said outer helical groove with the same diameter D2 as the first cylindrical casing for moving up and down said piston with it's injection/extraction tube that contains an annular flexible seal element at the end, wherein the construction material is a light weight material.

The advantage is a repair injector, which can be easily placed in a known support device, which repair injector is easy to handle with great accuracy in practice and which produces a high standard repair quality.

Then the repair injector according to the invention is further characterized in that mentioned known support device often has a tripod support with rubber suction cups, which are provided to fix on the windshield and an extension strip to screw said repair injector in a bore with thread D1.

The advantage is a very flexible placement and movement when inspecting the repair injector over the windshield mounted in said support device.

Furthermore, the repair injector according to the invention is further developed with the characteristics that the first cylindrical casing with diameters D1 and D2 has an internal assembly of a central merely axial up and down movable piston with an axial pin at the underside, which moves in the lower tube part in order to inject the repair resin and to retract the air bubbles out of said repair resin and that at the upper side an axle is supported in a circular bearing constructed in the internal upper side of said second rotating cylindrical casing.

The advantage is, that only the outer cylindrical casing for processing is turned around his axis by hand and due to the bigger diameter D2 a very precise moving of said axial pin is possible. This way a very professional result in repairing laminated glass panes (vertical windshields) is possible.

Then the repair injector according to the invention is further developed in that said material of the repair injector and the support device is made of aluminium.

The advantage is the lowered weight of especially upstanding automobile windshields, so the skilled craftsman can do a better repair job and the costs are lowered.

Then the repair injector according to the invention is further developed in that the maximum angle beta (β) of the helical groove is 7,853 degrees and the minimum friction coefficient gamma 0,25 from steel (steel cam (6)) on aluminium, being a friction angle (γ) of 14 degrees, so angle γ > angle β and the repair injector is self-locking in all positions.

The advantage is, that all phases of the repair procedure are very stable, which makes it easy in use for the skilled craftsman.

Then the repair injector according to the invention is further developed in that said threaded diameter D1 of 8 mm and a pitch of 3 mm under a central angle alpha (α) with the axis of the repair injector of 6,807 degrees and the helical groove with diameter D2 of 30 mm with an increasing pitch form 3 mm until 13 mm.

The advantages are a normal screwing down of the repair injector into said support device and the ability to adjust the axial movement of the injector pin from fine to coarse. For the skilled craftsman this is an extra possibility.

Then the repair injector according to the invention is further developed in such a way that the repair injector is anodized with a coating.

The advantages are to give the repair injector a nice exterior e.g., trademarks, symbols etc. and a protection against corrosion.

### Brief description of the drawing.

A preferred embodiment of the present invention will now be descried with reference to the accompanying drawing, in which:
Figure 1A shows an axial section over the line 1A-1A of figure 1B of the repair injector in the starting or highest position of the resin injection procedure according to the invention;
Figure 1B shows a side view of said repair injector in the position of figure 1A;
Figure 2A shows an axial section over the line IIA-IIA of figure 2B of the repair injector in the finishing position of the repair resin injection and the start of the air bubbles retraction procedure;
Figure 2B shows a side view of said repair injector in the position of figure 2A;
Figure 3A shows a side view of the known support device with mounted (screwed) repair injector in an axial section over the line IIIA-IIIA of figure 3B according to the invention; and
Figure 3B shows a side view of the support device with the mounted or screwed repair injector of figure 3A.

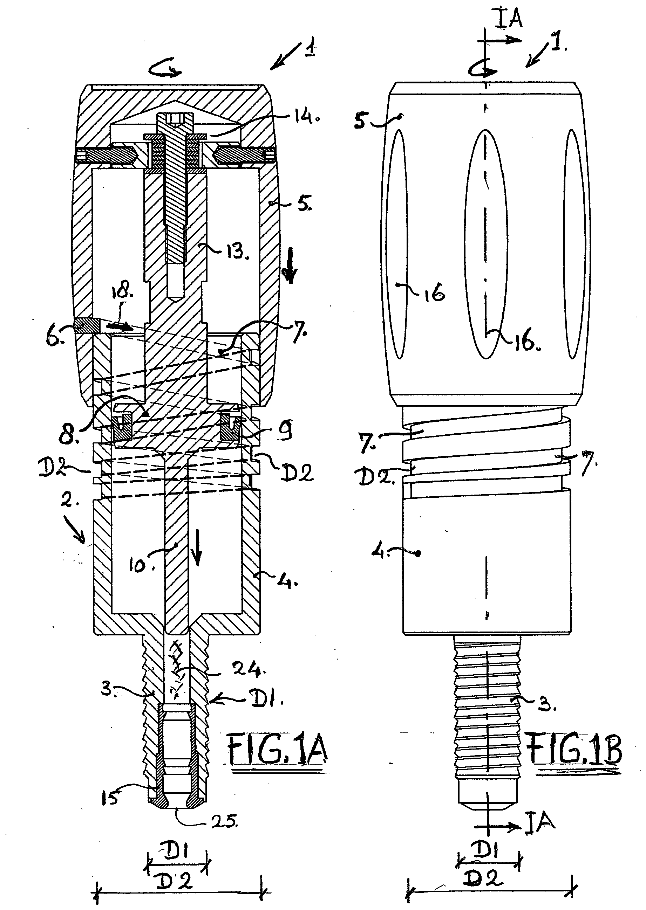

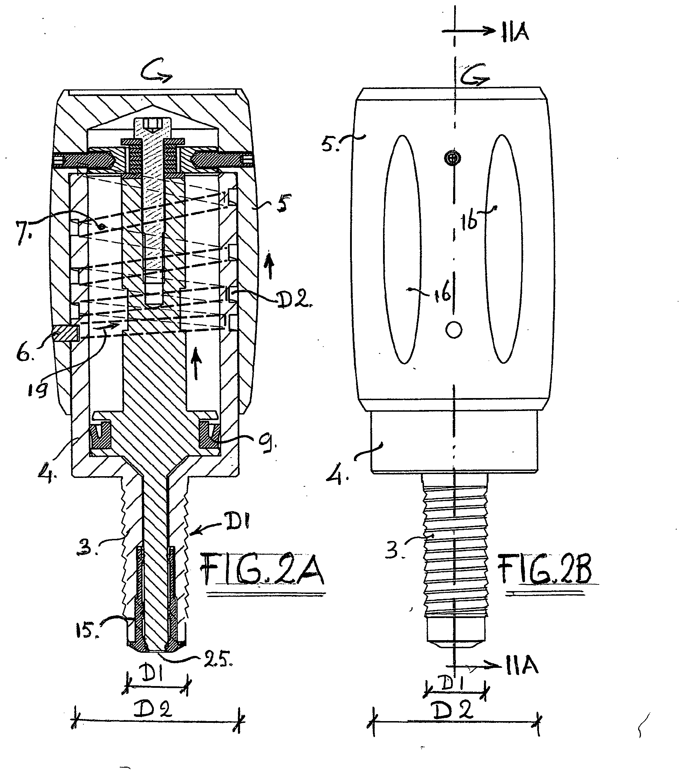

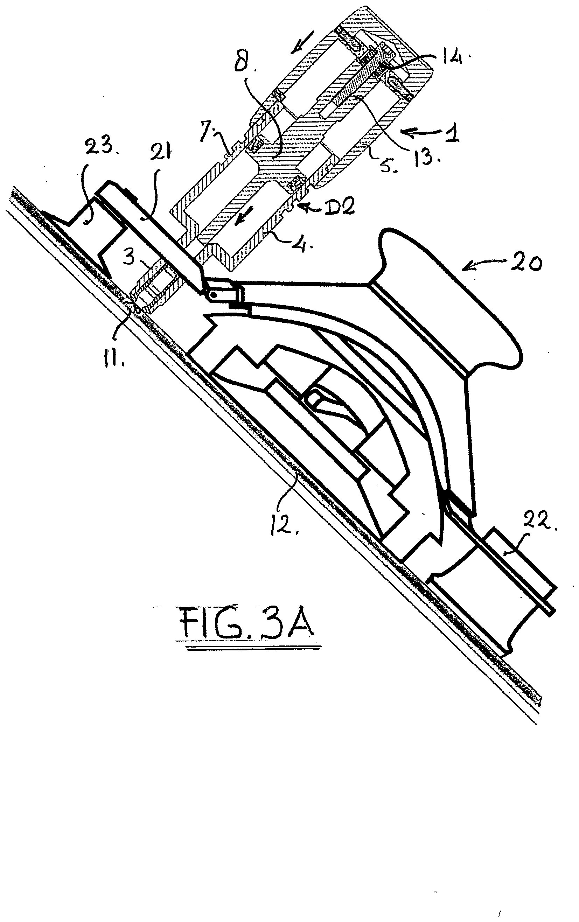

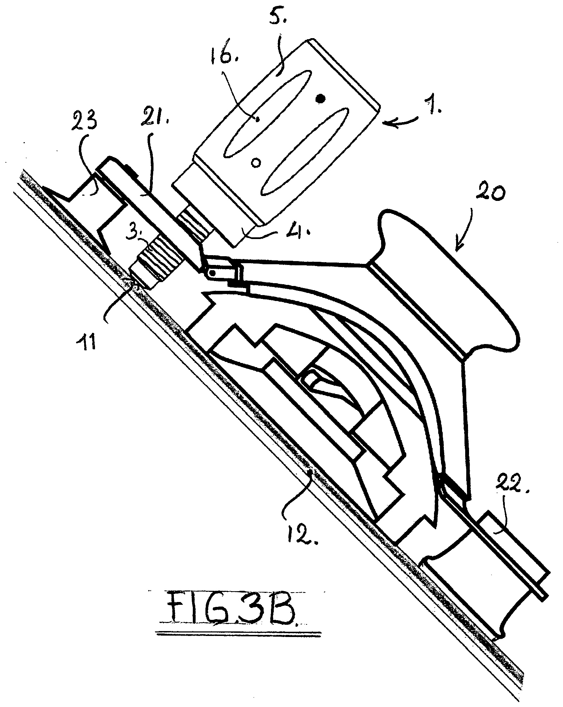

The figure 1A and 1B show an axial and a side view of the repair injector 1 according to the invention. In its cross-section the repair injector has a first inner central cylindrical casing 2, executed as a two-stepped cylindrical casing 3,4 with an outer screw diameter D1 indicated with 3 and an outer helical grooved diameter D2 indicated with 4. The material is from aluminium because of the light weight. The second outer cylindrical aluminium casing 5 can be axially rotated by hand and an inner steel cam 6 slides in the helical groove 7 of the first inner central cylindrical casing 2 of aluminium. So, this casing 2 does not rotate. The piston with rubber sealing is only axially movable which shows less friction and needs less effort of the user (which is an advantage). The minimum angle of friction gamma (γ) is much higher than the maximum circular helical angle beta (β) of the helical groove 7 with diameter D2. Angle γ > angle β. The angle alpha (α) is the central angle for the pitch of the screw threads. The piston 8 with his circular sealing 9 has an axial injection/retraction pin 10 for driving the repair resin into the crack 11 or the damage point of the windshield 12 and retract the air bubbles from the injected resin. See also the figures 3A and 3B. Then, the piston 8 has a top axle 13, which is placed in a central bearing construction 14 with its top. So, the second outer cylindrical casing 5 rotates around the bearing construction 14 and moves the axial injection/retraction pin 10 to and from the windshield 12. At the end of the outer part 3 with an outer thread diameter D1 an annular cylindrical rubber element 15 is put to rest flexibly on said windshield 12 and to close-off the repair resin operation and the retraction of air bubbles from the repair resin. The outer grooved diameter D2 is an increasing helical groove 7 for accurately guiding said steel cam 6 as described. The measures to form the central bearing construction 14 are constructed in the inner top of the second outer cylindrical casing 5. Also see figures 1A and 2A. On the outer surface elliptical recesses 16 are provided to easily rotate the second outer cylindrical casing 5 by hand. See the figures 1B and 2B. In the different figures the same elements are indicated with the same numbers. In figure 1A the piston 8 is moving downwards indicated with arrow 18 and moves upwards indicated with arrow 19 in figure 2A. In the figures 3A end 3B the fixing of the support device 20 is shown with the rubber suction cups 22 and 23. The rotatable extension strip is indicated with 21.

The self-locking property, the accurate adjustment of the piston, the low pressure on the windshield by the cylindrical annular flexible sealing, the simplified operation by hand and the relatively low manufacturing costs are the most important properties. However, it is obvious that modifications and/or additions can be made, but these shall remain within the scope and field of the invention defined by the claims.

## Claims

1. Repair injector with a screw mounting construction to a known support device, which is temporarily fixed on a laminated glass pane, which are mostly upstanding automobile windshields, which sometimes have a crack, caused by grit stones or such, which crack is mostly in the form of a bullseye or a star and initially can have more small cracks radiating from an open point in the surface of the windshield, wherein said repair injector with its central spindle pin to the tube mouth puts or presses the repair resin into said crack and afterwards retracts the air bubbles from the repair resin, wherein for a good inspection of the repaired crack said repair injector can be shifted over a short distance , **characterized in that** the repair injector (1) is built-up with a first cylindrical casing (2), wherein a merely longitudinal or axial movable piston assembly (8) is placed with an injection tube (10) for repair resin (24) and to retract air bubbles from said injected repair resin (24), wherein said first cylindrical casing 2 in two-stepped in axial sense is executed with a lower tube part (3) with an outer screw thread diameter D1 for connecting with the support device (20) and an upper tube part (4) with an outer helical groove (7) with diameter D2, wherein D1 < D2 and a second outer axial rotating cylindrical casing (5) is mounted around with an internal steel cam (6) sliding in said helical groove (7) with the same diameter D2 as the first cylindrical casing (2) for moving up and down said piston (8) wit its injection/extraction tube (3) with an annular flexible element (15) at the end, wherein the construction material is a light weight material.

2. Repair injector as in claim 1, **wherein** mentioned known support device (20) mostly has a tripod support with rubber suction cups (22, 23) provided to fix at the windshield (12) and an extension strip (21) to mount into said repair injector by screwing in a bore with thread D1.

3. Repair injector as in claim 1, **wherein** the first two stepped cylindrical casing (2) with diameters D1 and D2 has an internal assembly existing of a central merely up and down movable piston (8) with an axial pin at the underside moving the lower tube part (3) to inject to repair resin and to retract the air bubbles from the repair resin (24) and an axle (13) at the upper side is supported in a circular bearing construction (14) in the upper side of said upper side of said rotating cylindrical casing (5).

4. Repair injector as in claim 1-5, **wherein** said light material is made from aluminium.

5. Repair injector as in claim 1-6, **wherein** the maximum angle beta (β) of the helical groove (7) is 7,853 degrees and the minimum friction coefficient of 0,25 from steel (steel cam (6)) on aluminium, being a friction angle (γ) of 14 degrees, so angle γ > angle β and the repair injector is self-locking in all positions.

6. Repair injector as in claim 1-3, **wherein** said outer threaded diameter D1 is about 8 mm and has a pitch of 3 mm.

7. Repair injector as in claim 1-4, **wherein** said outer helical groove (7) with diameter D2, wherein D2 is about 30 mm with an increasing pitch from 3 mm until 13 mm.

8. Repair injector as in claim 1-7, **wherein** the surfaces of the repair injector are anodized with a coating.

## Patentansprüche

1. Reperaturinjektoren mit einer Schraubbefestigungskonstruktion an einer bekannten Trägervorrichtung, die vorübergehend an einer Verbundglasscheibe befestigt wird, bei der es sich meist um hochstehende Windschutzscheiben handelt, die manchmal einen Riss aufweisen, der durch Splittsteine oder dergleichen verursacht wird, wobei der Riss meist in Form ist einer Bullauge oder eines Sterns und kann zunächst mehrere kleine Risse aufweisen, die von einer offenen Stelle in der Oberfläche der Windschutzscheide ausgehen, wobei der Reparaturinjektor mit seinem zentralen Spindelstift zur Rohrmündung das Reparaturharz in der Riss einbringt oder drückt und sich anschließend zurückzieht mit den Luftblasen aus dem Reparaturhartz, wobei der Reparaturinjektor für eine gute Inspektion des reparierten Risses über eine kurze Strecke verschoben werden kann, **dadurch gekennzeichnet, dass** der Reparaturinjektor (1) mit einem ersten zylindrischen Gehäuse (2) aufgebaut ist, wobei eine lediglich in Längsrichtung oder axial bewegliche Richtung eine Kolbenanordnung (8) mit einen Einspritzrohr (10) für Reparaturharz (24) und zum Zurückziehen von Luftblasen aus dem eingespritzten Reparaturharz (24) angeordnet ist, wobei das erste zylindrische Gehäuse (2) mit zwei in axialer Richtung verschiedene Durchmessern D1 und D2 ausgeführt ist und mit einen unteren Rohrteil (3) mit einer äußeren spiralförmigen Nut oder Rille (7) mit Durchmesser D2, wobei D1 < D2 ist und ein zweite äußeres axial rotierendes zylindrisches Gehäuse (5) mit einem inneren Stahlnocken (6) herummontiert ist, der in der spiralförmigen Nut (7) mit gleichen Durchmesser D2 in das erste zylindrische Gehäuse gleitet, um nach oben oder nach unten zu bewegen mit der Kolben (8) mit seinem Injektions-/Extraktionsrohr (3) mit einem ringförmigen Element (15) am seinem Ende, wobei das Konstruktionsmaterial ein leichtes Material ist.

2. Reparaturinjektor nach Anspruch 1, **wobei** die bekannte Stützvorrichtung (20) hauptsächlich aus einem Stativ mit Gummisaugnäpfen (22, 23) besteht zur Befestigung an der Windschutzscheibe (12) und hat einem Verlängerungsstreifen (21) zur Montage von der Reparaturinjektor (1) durch Einschrauben in der Bohrung mit Gewinde D1.

3. Reparaturinjektor nach Anspruch 1, **wobei** das erste zweistufige zylindrische Gehäuse (3) mit den Durchmessern D1 und D2 eine innere Baugruppe aufweist, die aus einem Zentralen lediglich auf und ab beweglichen Kolben (8) mit einem axialen Stift (10) besteht, die in der Unterseite des Rohrteils (3) bewegbar ist für das Einspritzen von Reparaturharz (24) und für das zurückziehen von Luftblasen aus den genannten Reparaturharz (24) und hat an der Oberseite eine Achse (13), die mit einer kreisförmigen Lagerkonstruktion (14) rotierend gelagert ist in ein zylindrisches Gehäuse (5).

4. Reparaturinjektor nach Anspruch 1-3, **wobei** das leichte Material Aluminium ist.

5. Reparaturinjektor nach Anspruch 1-4, **wobei** der maximale Winkel Beta (β) der spiralförmigen Nut (7) 7,853 Grad beträgt und der minimale Reibungskoeffizient von 0,25 van Stahl (Stahlnocken (6)) auf Aluminium beträgt, was ein Reibungswinkel (γ) von 14 Grad aufweist, wobei Winkel γ 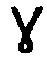 > Winkel β und wobei der Reparaturinjektor (1) in allen Positionen selbsthemmend ist.

6. Reparaturinjektor nach Anspruch 1-3, **wobei** der Außengeschwindedurchmesser D1 etwa 8 mm beträgt und eine Steigung der Nutkreis von 3 mm aufweist.

7. Reparaturinjektor nach Anspruch 1-3, **wobei** die äußere spiralförmige Nut (7) einen Durchmesser D2 hat, wobei D2 etwa 30 mm beträgt mit einer zunehmenden Steigung der Nut (7) van 3 mm bis 13 mm.

8. Reparaturinjektor nach Anspruch 1-7, **wobei** die Oberflächen des Reparaturinjektors mit einer Beschichtung anodisiert sind.

## Revendications

1. Injecteur de réparation doté d'une structure de montage vissée sur un dispositif de support connu, qui est fixé temporairement sur une vitre en verre feuilleté, qui sont pour la plupart des pare-brise d'automobiles debout, qui présentent parfois une fissure, provoquée par des pierres de gravier ou autres, laquelle fissure se présente principalement sous la forme en forme de cible ou d'étoile et peut initialement présenter davantage de petites fissures rayonnant à partir d'un point ouvert dans la surface du parebrise, ledit injecteur de réparation avec sa broche centrale vers l'embouchure du tube mettant ou pressant la résine de réparation dans ladite fissure et se rétractant ensuite les bulles d'air proviennent de la résine de réparation, dans lequel, pour une bonne inspection de la fissure réparée, ledit injecteur de réparation peut être déplacé sur une courte distance, **caractérisé en ce que** l'injecteur de réparation (1) est constitué d'un premier boîtier cylindrique (2), dans lequel un ensemble piston mobile simplement longitudinal ou axial (8) est placé avec un tube d'injection (10) pour la résine de réparation (24) et pour rétracter les bulles d'air de ladite résine de réparation injectée (24), dans lequel ledit premier boîtier cylindrique (2) en deux étagée dans le sens axial est réalisée avec une partie tubulaire inférieure (3) avec un diamètre de filetage extérieur D1 pour la connexion avec le dispositive de support (20) et une partie tubulaire supérieure (4) avec un rainure hélicoïdale extérieure (7) avec un diamètre D2, dans lequel D1 < D2 et un deuxième boîtier cylindrique rotatif axiale externe (5) est monté autour d'une came interne en acier (6) coulissant dans ladite raine hélicoïdale (7) avec le même diamètre D2 que le premier boîtier cylindrique (2) pour monter et descendre ledit piston (8) avec son tube d'injection/extraction (3) avec un élément flexible annulaire (15) à son extrémité, le matériau de construction étant un matériau léger.

2. Injecteur de réparation selon la revendication 1, **dans lequel** le dispositive de support connu mentionné (20) comporte principalement un support de trépied avec des ventouses en caoutchouc (22, 23) prévues pour être fixées au pare-brise (12) et une bande d'extension (21) à monter dans ladite réparation injecteur en vissant un alésage avec filetage D1.

3. Injecteur de réparations selon la revendication 1, **dans lequel** les deux premiers boîtiers cylindriques étagés (2) de diamètres D1 et D2 comportent un ensemble interne constitué d'un piston central mobile simplement de haut en bas (8) avec une broche axiale sur la face inférieure déplaçant le tube inférieur une partie (3) destinée à injecter de la résine de réparation et à rétracter les bulles d'air de la résine de réparation (24) et un axe (13) au niveau du côté supérieur est supporté dans une construction de roulement circulaire (14) dans le côté supérieur dudit côté supérieur dudit boîtier cylindrique tournant (5).

4. Injecteur de réparation selon les revendications 1à 5, **dans lequel** ledit matériau léger est constitué d'aluminium.

5. Injecteur de réparation selon les revendications 1 à 6, **dans lequel** l'angle bêta maximum (β) de la rainure hélicoïdale (7) est de 7,853 degrés et le coefficient de frottement minimum de 0,25 de l'acier (came en acier (6)) sur l'aluminium, étant un angle de frottement (Y) de 14 degrés, donc angle Y > angle β et l'injecteur de réparation est autobloquant dans toutes les positions.

6. Injecteur de réparation selon les revendications 1 à 3, **dans lequel** ledit diamètre fileté extérieur D1 est d'environ 8 mm et a un pas de 3 mm.

7. Injecteur de réparation selon les revendications 1 à 4, **dans lequel** ladite rainure hélicoïdale externe (7) a un diamètre D2, dans lequel D2 mesure environ 30 mm avec un pas croissant de 3 mm jusqu'à 13 mm.

8. Injecteur de réparation selon les revendications 1 à 7, **dans lequel** les surfaces de l'injecteur de réparation sont anodisées avec un revêtement.
